# EUROPÄISCHE PATENTSCHRIFT

(11) **EP 0 734 857 B1**
(45) Veröffentlichungstag und Bekanntmachung des Hinweises auf die Patenterteilung: **06.05.1999**
(21) Anmeldenummer: 96104633.1
(22) Anmeldetag: 23.03.1996
(51) Int. Cl.: B41F 13/20, B41F 31/30, F16C 13/02

(54) **Lagerung für zylindrische Bauteile**
Bearing for cylindrical elements
Palier pour éléments cylindriques

(30) Priorität: 30.03.1995 DE 19511710
(43) Veröffentlichungstag der Anmeldung: 02.10.1996
(73) Patentinhaber: MAN Roland Druckmaschinen AG, 63075 Offenbach (DE)
(72) Erfinder: Hummel, Peter, 63069 Offenbach (DE); Ortner, Robert, 63755 Alzenau (DE)
(74) Vertreter: Stahl, Dietmar

(56) Entgegenhaltungen:
- EP-A- 0 603 589
- EP-B- 0 600 230
- US-A- 4 759 286
- PATENT ABSTRACTS OF JAPAN vol. 9, no. 146 (M-389), 21.Juni 1985 & JP-A-60 023621 (SHIRAHATA), 6.Februar 1985,

## Beschreibung

Die Erfindung betrifft eine einseitig offene Lagerung für rotationssymmetrische Bauteile, vorzugsweise für Walzenzapfen in Druckmaschinen nach dem Oberbegriff des Hauptanspruches. Die Lagerung eignet sich insbesondere für Zapfen von Walzen, die in Farbwerken, Feuchtwerken oder Lackierwerken eingesetzt sind.

Eine Lagerung dieser Art ist aus der auf der US 3 167 010 aufbauenden DE 4 216 781 A1 bekannt. Letztere besitzt ein in einem Lagerkörper vorgespanntes Andrückelement, das in einem Einschraubelement linear beweglich geführt ist. Diese Lagerung soll universell einsetzbar sein. Nachteilig ist jedoch, daß durch die Abstützung des Andrückelementes der universelle Einsatz eingeschränkt wird. Bei kompakt angeordneten Walzen, z.B. in Walzenzügen eines Farbwerkes, sind die Freiräume zum Ein-/Ausbau der Walzen häufig eingeschränkt, so daß Abstützung und Andrückelement den notwendigen Freiraum weiter einschränken. Die Walzenlagerung eignet sich nur für Walzen, die von mindestens zwei benachbarten Walzen wiederum abgestutzt werden. Weiterhin muß die Walzenlagerung bei einem Walzenwechsel neu eingestellt werden, da keine Mittel für eine reproduzierbare Walzeneinstellung angegeben sind und somit sich die Umrüstzeiten bei einem Walzenwechsel erhöhen.

Eine weitere Walzenlagerung ist aus der EP 0 603 589 A2 bekannt. Der Walzenzapfen ist in einer Aufnahme gelagert, welche einen über einen Bolzen federbelasteten Niederhalter aufweist. Niederhalter und Aufnahme sind gegeneinander verspannbar und nehmen den Walzenzapfen formschlüssig auf. Der Niederhalter ist fest mit dem Bolzen verschraubt und ist um die Längsachse des Bolzens aus dem Bereich des Walzenzapfens heraus schwenkbar.

Schließlich ist aus der US 4 759 286 eine Halterung für Walzen bekannt, deren Lasche auf die zu lagernde Walze wirkt. Zur Abstützung der in der Walzenhalterung aufgenommenen Walze benötigt diese zwei benachbarte Walzen. Die auf einem Bolzen drehbare Lasche ist in eine Nut der Halterung einrastbar.

Aufgabe der Erfindung ist es, eine Lösung zu entwickeln, die eine selbsttätige Justage bereits bei nur einer benachbarten Walze gestattet und universell ohne die notwendigen Freiräume einzuschränken, einsetzbar ist.

Erfindungsgemäß wird dies dadurch gelöst, daß ein vorgespannter Schnellverschluß linear beweglich und drehbeweglich aufeinem mit einer vorzugsweise gestellfesten Halterung verbundenen Einschraubelement geführt ist. Der Schnellverschluß und das zugeordnete Einschraubelement bilden getriebetechnisch ein Dreh-Schub-Gelenk mit einem Freiheitsgrad von f = 2. Vorteile dieser Lösung sind, daß der Schnellverschluß lediglich eine benachbarte Walze zum Abstützen erfordert und der Schnellverschluß in Weiterbildung sich auch für mehrere benachbarte Walzen eignet. Durch die drehbewegliche Anordnung des Schnellverschlusses werden bei einem Walzenwechsel keine Freiräume eingeschränkt, da der Schnellverschluß um die Achse des Einschraubelementes weggeschwenkt werden kann. Gleichzeitig zentriert im verriegelten Zustand der Schnellverschluß die zu lagernde Walze zu einer benachbarten Walze oder einem Zylinder, so daß eine weitere Walze/ein Zylinder zur Abstützung der Lagerung nicht erforderlich ist. Der Anpreßdruck des Schnellverschlusses auf den Walzenzapfen liegt vorzugsweise in einer Wirkrichtung zu der mit der benachbarten Walze gebildeten Spaltstelle. Die schnellverschließbare Lagerung ist einfach und sicher zu bedienen und stellt eine kostengünstige Lagerung für rotationssymmetrische Bauteile, wie z.B. eine Steckachse einer Walze, das Walzenschloß einer Walze oder das auf einem Walzenzapfen angeordnete Lager dar. Die Vorspannung des Schnellverschlusses ist durch Drehen des Einschraubelementes einstellbar und die Selbsthemmung des Einschraubelementes gewährleistet bei Walzenwechsel reproduzierbare Positionen. Damit werden Umrüstzeiten weiter minimiert.

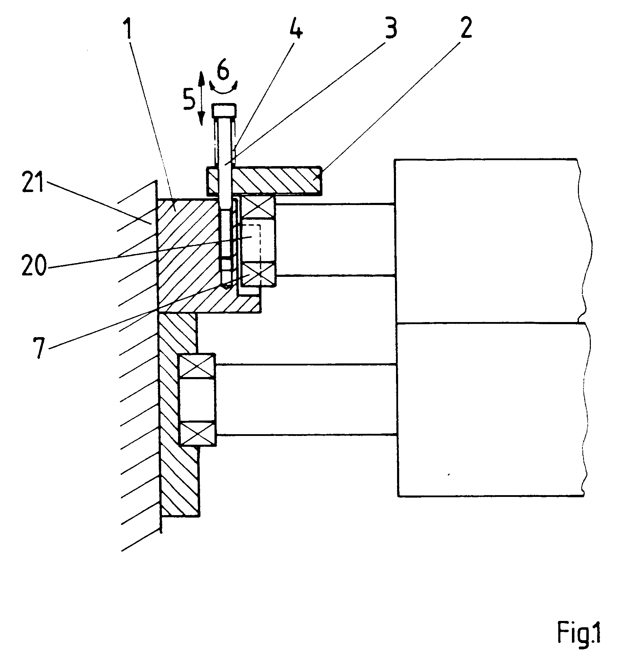

Die Erfindung soll an einem Ausführungsbeispiel näher erläutert werden. Dabei zeigen schematisch
- Fig. 1: eine schnellverschließbare Lagerung mit obenliegendem Schnellverschluß (Vorderansicht),

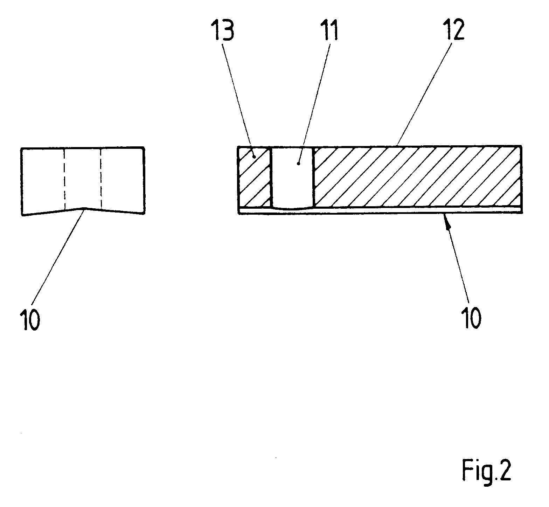

- Fig. 2: ein Schnellverschluß (Vorder- und Seitenansicht).

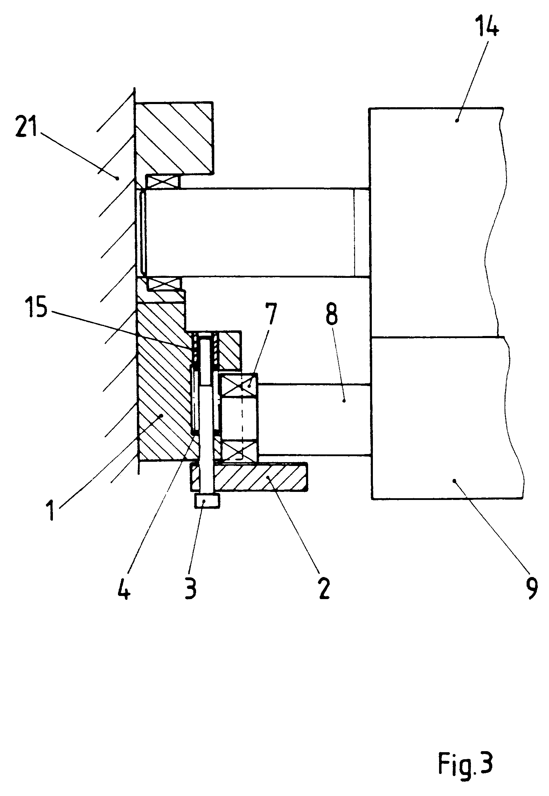

- Fig. 3: eine schnellverschließbare Lagerung mit unten liegendem Schnellverschluß (Vorderansicht),
- Fig. 4: eine Walze mit schnellverschließbarer Lagerung in Kontakt mit zwei benachbarten Walzen (Seitenansicht).

In einem Farbwerkswalzenzug einer Offsetdruckmaschine ist eine Walze 9 mit einer ersten benachbarten Walze 14 in Kontakt. Die Walze 9 besitzt an jeder Stirnseite einen Zapfen 8 mit darauf angeordnetem Lager 7 und soll beidseitig in je einer schnellverschließbaren Lagerung aufgenommen werden. Die schnellverschließbare Lagerung besteht dabei aus einer schwenkbar am Maschinengestell 21 angeordneten Halterung 1, die ein Gewinde zur Aufnahme eines Einschraubelementes 3 aufweist. Das Einschraubelement 3 durchdringt in einer Bohrung 11 einen Schnellverschluß 2, der in Drehrichtung 6 und in Linearrichtung 5 beweglich zum Einschraubelement 3 ist. Zwischen dem freien Ende des Einschraubelementes 3 und dem Schnellverschluß 2 ist konzentrisch um das Einschraubelement 3 ein erstes Federelement 4, welches als Druckfeder wirkt, angeordnet. Einschraubelement 3 und Schnellverschluß 2 bilden getriebetechnisch ein Drehschubgelenk. Der Schnellverschluß 2 besitzt an der zur Walze 9 zugewandten Seite eine Zentrierung 10, vorzugsweise eine Prismenführung, die im verriegelten Zustand achsparallel zur Walze 9 verläuft. Weiterhin besitzt der Schnellverschluß 2 die bereits erwähnte Bohrung 11, die vertikal mittig zur Zentrierung 10 angeordnet ist und den Schnellverschluß 2 in zwei Hebelarme 12, 13 teilt. In verriegeltem Zustand ist der kleinere Hebelarm 13 dem Maschinengestell 21 und der größere Hebelarm 12 der Walze 9 zugewandt. Je nach den gegebenen Platzverhältnissen kann das erste Federelement 4 auch innerhalb der Halterung 1 konzentrisch zum Einschraubelement 3 angeordnet sein. Das Federelement 4 stützt sich dabei an der Halterung 1 und an einer Gewindehülse 15 ab. Die Gewindehülse 15 ist in der Halterung 1 längsverschiebbar zum Einschraubelement 3, jedoch gegen Verdrehung gesichert, angeordnet.

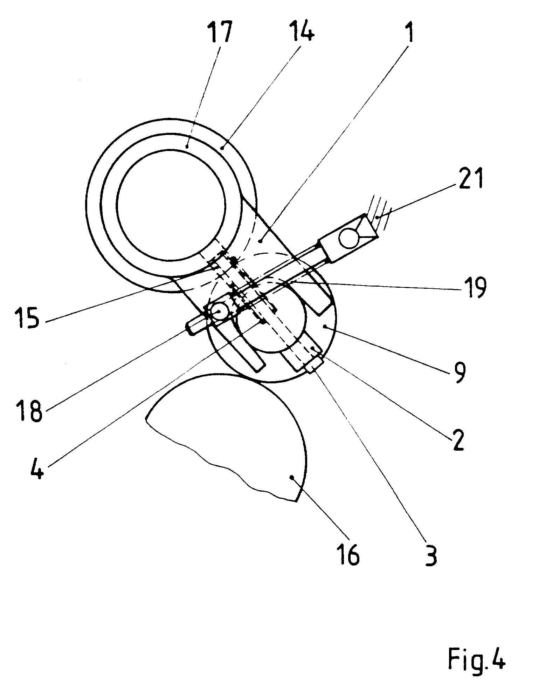

Gemäß Fig. 4 ist die Walze 9 mit zwei benachbarten Walzen 14, 16 in Kontakt. Die den Schnellverschluß 2 aufnehmende Halterung 1 ist dabei am Maschinengestell 21 in einem ersten Drehgelenk 17 angeordnet, welches im vorliegenden Beispiel zur Walze 14 achsparallel ist. An der Halterung 1 ist in einem zweiten Drehgelenk 18 ein zweites Federelement 19 zum Maschinengestell 21 abgestützt angeordnet. Die Federkraft des Schnellverschlusses 2 ist im wesentlichen in Richtung Walzenspalt, der durch die Walzen 9 und 14 gebildet ist, gerichtet.

Die Wirkungsweise ist wie folgt:
In Einbaulage der Walze 9 ist jede schnellverschließbare Lagerung offen, so daß ausreichend Freiraum zum Einlegen der Walze 9 vorhanden ist. Dies wird dadurch erreicht, daß der Schnellverschluß 2 um vorzugsweise 90° in Drehrichtung 6 um das Einschraubelement 3 manuell verschwenkt wird. Die Walze 9 wird in die Halterung 1 eingelegt und liegt an der ersten benachbarten Walze 14 an. Zur Unterstützung des Einlegens der Walze 9 als auch bei Kontakt mit zwei benachbarten Walzen 14, 16 sind an der Halterung 1 angeordnete Führungsflächen 20 von Vorteil . Der Schnellverschluß 2 wird in entsprechender Drehrichtung 6 verschwenkt, so daß die Zentrierung 10 mit dem Außenring des Lagers 7 in Kontakt ist und die Walzenlagerung damit verriegelt ist. Der Schnellverschluß 2 wird dabei entgegen der Federwirkung über das Lager 7 gehoben und zentriert die Walze 9 über das Lager 7. Mittels Einschraubelement 3 kann vor oder nach dem Einlegen der Walze 9 der Anpreßdruck und damit der Walzenstreifen zwischen den Walzen 9, 14 eingestellt werden. Bei einem Walzenwechsel können somit stets die gleichen Einstellwerte des Walzenstreifens hinsichtlich der ursprünglichen Position wieder eingenommen werden. Ist das Einschraubelement 3 mit einer Hülse 15 gekoppelt, so wird diese beim Einstellen des Anpreßdruckes in Linearrichtung 5 bewegt und somit das Federelement 4 zusammengedrückt oder entspannt. Sind der Walze 9 zwei benachbarte Walzen 14, 16 zugeordnet, so wird analog die schnellverschließbare Lagerung eingesetzt. Die Halterung 1 ist jedoch zusätzlich in dem ersten Drehgelenk 17 am Maschinengestell 21 schwenkbar. Durch das zweite Federelement 19 wird die bereits an die erste benachbarte Walze 14 angedruckte Walze 9 an die zweite benachbarte Walze 16 angedrückt. Dabei kann die Walze 9 mit ihrem Lager 7 an einer Führungsfläche 20 anliegen. Die Zentrierung 10 kann neben der Prismenführung auch als Kugelrast oder mit einer Krümmung zur Aufnahme des Lagers versehen ausgebildet sein.

### Bezugszeichenliste

- 1: Halterung
- 2: Schnellverschluß
- 3: Einschraubelement
- 4: Federelement
- 5: Linearrichtung
- 6: Drehrichtung
- 7: Lager
- 8: Zapfen
- 9: Walze
- 10: Zentrierung
- 11: Bohrung
- 12: großer Hebelarm
- 13: kleiner Hebelarm
- 14: erste benachbarte Walze
- 15: Hülse
- 16: zweite benachbarte Walze
- 17: erstes Drehgelenk
- 18: zweites Drehgelenk
- 19: zweites Federelement
- 20: Führungsfläche
- 21: Maschinengestell

## Patentansprüche

1. Einseitig offene Lagerung für rotationssymmetrische Bauteile (9), vorzugsweise Walzen in Druckmaschinen, wobei die Lagerung das aufgenommene Bauteil nach der offenen Seite gegen ein ortsfestes, zweites rotationssymmetrisches Bauteil (14), vorzugsweise eine Walze, kraftschlüssig in Berührung hält,
**dadurch gekennzeichnet**,
daß an einer gestellfesten oder gestellfest schwenkbaren Halterung (1) für das rotationssymmetrische Bauteil (9) ein Einschraubelement (3) angeordnet ist, welches mit einem kraftschlüssig belasteten, auf das als Walze ausgebildete rotationssymmetrische Bauteil (9) wirkenden und eine dem Baute (9) zugeordnete Zentrierung (10) aufweisenden Schnellverschluß (2) ein Dreh-Schub-Gelenk bildet, in dem der Schnellverschluß (2) in Drehrichtung (6) und Linearrichtung (5) auf dem Einschraubelement (3) frei beweglich ist.

2. Einseitig offene Lagerung nach dem Anspruch 1,
**dadurch gekennzeichnet**,
daß der Schnellverschluß (2) eine Bohrung (11) aufweist, die das Einschraubelement (3) aufnimmt.

3. Einseitig offene Lagerung nach den Ansprüchen 1 und 2,
**dadurch gekennzeichnet**,
daß der Schnellverschluß (2) einen kurzen Hebelarm (13) und einen langen Hebelarm (12) aufweist, wobei der lange Hebelarm (12) die Lagerung der Walze (9) verriegelt.

4. Einseitig offene Lagerung nach Anspruch 1,
**dadurch gekennzeichnet**,
daß die Halterung (1) eine das Einschraubelement (3) aufnehmende, linear bewegliche und drehstarre Hülse (15) aufweist, wobei zwischen Hülse (15) und Halterung (1) konzentrisch auf dem Einschraubelement (3) ein Federelement (4) angeordnet ist.

5. Einseitig offene Lagerung nach Anspruch 1,
**dadurch gekennzeichnet**,
daß ein Federelement (4) zwischen dem freien Ende des Einschraubelementes (3) und dem Schnellverschluß (2) konzentrisch auf dem Einschraubelement (3) lagefixiert angeordnet ist.

6. Einseitig offene Lagerung nach Anspruch 1,
**dadurch gekennzeichnet**,
daß die Halterung (1) gestellfest in einem ersten Drehgelenk (17) schwenkbar angeordnet ist und ein gestellfest schwenkbares Federelement (19) in einem zweiten Drehgelenk (18) über die Halterung (1) die Walze (9) an eine dritte Walze (16) andrückt.

7. Einseitig offene Lagerung nach Anspruch 1,
**dadurch gekennzeichnet**,
daß der auf die Walze (9) wirkende Anpreßdruck des Schnellverschlusses (2) auf den Walzenspalt zu der benachbarten zweiten Walze (14) gerichtet ist.

## Claims

1. One-sided open bearing for rotationally symmetric components (9), preferably rollers in printing presses, wherein the bearing holds the received component towards the opening side against a fixed second rotationally symmetric component (14), preferably a roller, in frictional contact,
characterised in that on a mounting (1) fixed with respect to the frame or swivellable fixed to the frame for the rotationally symmetric component (9), a screwing in element (3) is arranged which, with a positively interlocked loaded rapid closure (2) acting on the rotationally symmetric component (9) constructed as a roller, and having a centring (10) fitted to the component (9) forms a twist push linkage, in which the rapid closure (2) is freely movable in the rotational direction (6) and linear direction (5) on the screwing in element (3).

2. One-sided open bearing according to Claim 1,
characterized in that the rapid closure (2) has a bore (11) which receives the screwing in element (3).

3. One-sided open bearing according to Claims 1 and 2,
characterised in that the rapid closure (2) has a short lever arm (13) and a long lever arm (12), wherein the long lever arm (12) locks the bearing of the roller (9).

4. One-sided open bearing according to Claim 1,
characterised in that the mounting (1) has a sleeve (15) rigid with respect to rotation, but linearly movable and receiving the screwing in element (3), wherein between sleeve (15) and mounting (1), a spring element (4) is arranged concentrically on the screwing in element (3).

5. One-sided open bearing according to Claim 1,
characterized in that a spring element (4) is arranged between the free end of the screwing in element (3) and the rapid closure (2) fixed in position concentrically on the screwing in element (3).

6. One-sided open bearing according to Claim 1,
characterized in that the mounting (1) is arranged swivellably fixed with respect to the frame in a first rotary link (17) and a swivellable spring element (19) fast with respect to the frame presses the roller (9) in a second rotary linkage (18) via the mounting (1) against a third roller (16).

7. One-sided open bearing according to Claim 1,
characterized in that the pressing-on pressure of the rapid closure (2) acting on the roller (9) is directed to the roller nip with respect to the neighbouring second roller (14).

## Revendications

1. Palier ouvert d'un côté pour des pièces (9) à symétrie de révolution, de préférence des rouleaux dans des machines d'impression, le palier maintenant en contact par adhérence la pièce reçue vers le côté ouvert contre une seconde pièce fixe (14) à symétrie de révolution, avantageusement un rouleau,
caractérisé en ce que, sur un moyen de maintien (1) solidaire du bâti ou pouvant pivoter en étant solidaire du bâti pour la pièce (9) à symétrie de révolution, il est agencé un élément de vissage (3), lequel forme, avec une fermeture rapide (2) chargée sous l'action d'une force, agissant sur la pièce (9) à symétrie de révolution réalisée comme rouleau, et présentant un moyen de centrage (10) associé à la pièce (9), un joint articulé et cylindrique, la fermeture rapide (2) étant librement mobile sur l'élément de vissage (3) en rotation (6) et en direction linéaire (5).

2. Palier ouvert d'un côté selon la revendication 1,
caractérisé en ce que la fermeture rapide (2) présente un perçage (11) qui reçoit l'élément de vissage (3).

3. Palier ouvert d'un côté selon les revendications 1 et 2,
caractérisé en ce que la fermeture rapide (2) présente un bras de levier long (12) et un bras de levier court (13), le bras de levier long (12) verrouillant le palier du rouleau (9).

4. Palier ouvert d'un côté selon la revendication 1,
caractérisé en ce que le moyen de maintien (1) présente un manchon (15) rigide en rotation, linéairement mobile, et recevant l'élément de vissage (3), un élément élastique (4) étant agencé entre le manchon (15) et le moyen de maintien (1) de façon concentrique sur l'élément de vissage (3).

5. Palier ouvert d'un côté selon la revendication 1,
caractérisé en ce qu'un élément élastique (4) est agencé de façon fixe en position entre l'extrémité libre de l'élément de vissage (3) et la fermeture rapide (2) de façon concentrique sur l'élément de vissage (3).

6. Palier ouvert d'un côté selon la revendication 1,
caractérisé en ce que le moyen de maintien (1) est agencé de façon pivotante en étant solidaire du bâti dans une première articulation tournante (17) et un élément élastique (19) pouvant pivoter en étant solidaire du bâti presse dans une seconde articulation tournante (18) par l'intermédiaire du moyen de maintien (1), le rouleau (9) contre un troisième rouleau (16).

7. Palier ouvert d'un côté selon la revendication 1,
caractérisé en ce que la pression de pressage, agissant sur le rouleau (9), de la fermeture rapide (2) est orientée sur l'emprise des rouleaux vers le second rouleau voisin (14).
